# EUROPEAN PATENT APPLICATION

(11) **EP 4 224 350 A1**
(43) Date of publication of application: **09.08.2023**
(21) Application number: 23154603.7
(22) Date of filing: 02.02.2023
(51) Int. Cl.: G06F 21/62

(54) **EXECUTING AUTOMATED BROWSING SESSIONS TO HIDE USER SESSION CHARACTERISTICS**

(30) Priority: 03.02.2022 US 202217591864
(71) Applicant: Capital One Services, LLC, McLean, Virginia 22102 (US)
(72) Inventor: MOSSOBA, Michael, McLean, VA 22102 (US); EDWARDS, Joshua, McLean, VA 22102 (US); WILLIAMS, Caroline, McLean, VA 22102 (US)
(74) Representative: Boult Wade Tennant LLP

(57) **Abstract**

Disclosed herein are system, method, and computer program product embodiments for executing automatic internet browsing sessions using pseudo-user profiles. In some embodiments, a plug-in integrated by a browser receives a request to execute an automated browsing session for the user profile. The plug-in retrieves a set of parameters associated with the user profile. The set of parameters comprise one or more rules for executing an automated browsing session. The plug-in executes the automated browsing session by automatically navigating to one or more websites, as indicated in the set of parameters. The plug-in interacts with the one or more websites based on the set of parameters.

## Description

### BACKGROUND

Entities oftentimes capture data associated with a user while the user is interacting with a user device. The data may include information about the websites the user visits, a user's purchase history, the applications purchased by the user, and the user's interactions with the different websites. The data may provide entities with clues as to the type of person using the user device.

Among these entities, certain unethical actors use the captured data to target vulnerable users. For example, unethical actors may identify a particular type of user on the internet based on the captured data, making said user vulnerable to scams or fraudulent activity.

### BRIEF DESCRIPTION OF THE DRAWINGS

The accompanying drawings are incorporated herein and form a part of the specification.
FIG. 1 is a block diagram of an architecture of a system for executing automated internet browsing sessions, according to some embodiments.
FIG. 2 is a block diagram illustrating an example configuration for the system for executing automated browsing sessions, according to some embodiments.
FIG. 3 is a flowchart illustrating the process of generating a pseudo-user profile, according to some embodiments.
FIG. 4 is a flowchart illustrating the process of executing an automated browsing session, according to some embodiments.
FIG. 5 is an example computer system useful for implementing various embodiments.

In the drawings, like reference numbers generally indicate identical or similar elements. Additionally, generally, the left-most digit(s) of a reference number identifies the drawing in which the reference number first appears.

### DETAILED DESCRIPTION

Provided herein are system, apparatus, device, method and/or computer program product embodiments, and/or combinations and sub-combinations thereof, for executing automated internet browsing sessions.

As described above, entities frequently collect users' internet usage data. The internet usage data may include internet cookies, internet browsing history, cache files, etc. The entities may include unethical actors may capture a users' usage data while users use their respective user devices. For example, unethical actors may install malware on users' computing devices. The malware may capture the users' browsing history, internet cookies, and other usage data. The unethical actors may use the usage data to identify the characteristics of the users. The characteristics may include the user demographic data and user preferences. Using these characteristics, unethical actors may identify users that are susceptible to frauds and scams. The unethical actors may then target such users with possible frauds and scams using the usage data.

For example, users that are of a certain age may be vulnerable to internet frauds and scams. Unethical actors may determine a user's age based on their internet usage data. The unethical actors may also determine the users' preferences based on their internet usage data. The unethical actors may then target the users of said age by presenting frauds or scams in a manner that does not look malicious to the users based on their respective user preferences.

Embodiments described herein solve these problems by executing automatic internet browsing sessions using pseudo-user profiles. In some embodiments, a plug-in integrated by an internet browser receives a request to execute an automated browsing session for the user profile. The plug-in retrieves a set of parameters associated with the user profile. The set of parameters comprise one or more rules for executing an automated browsing session. The plug-in executes the automated browsing session by automatically navigating to one or more websites, as indicated in the set of parameters. The plug-in interacts with one or more websites based on the set of parameters.

The embodiments described herein provide for executing automatic internet browsing sessions using pseudo-user profiles. To this end, the automated browsing sessions may generate data such as internet cookies, browsing history, cache files, etc. Similarly, the user's actual browsing session (e.g., when the user is browsing the internet), may generate similar data. The data generated from the automated browsing sessions and from the actual browsing session may create data points such that unethical actors are prevented from identifying accurate information about the user. As such, the unethical actors may be unable to determine whether the user is within a demographic which may be targeted for scams or fraudulent activity. This prevents the unethical actors from targeting users with various frauds and scams.

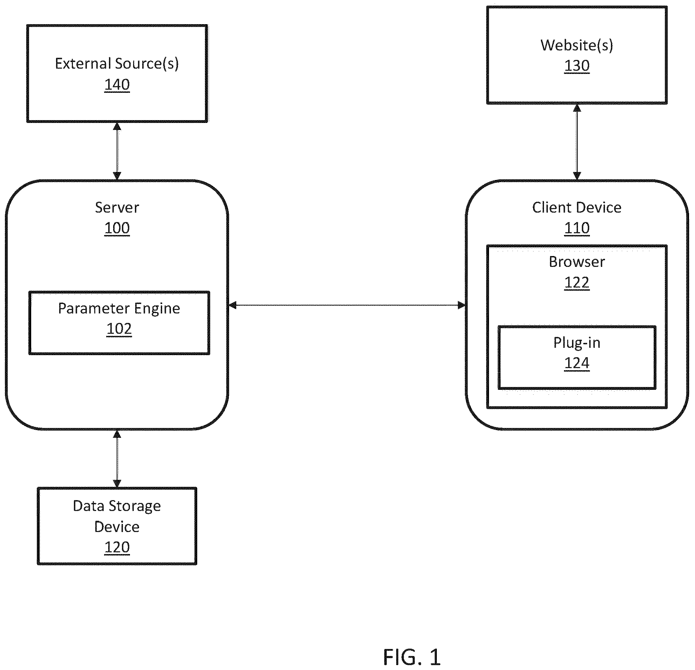

FIG. 1 is a block diagram of an architecture of a system for executing automated internet browsing sessions, according to some embodiments. In an embodiment, the architecture may include server 100, client device 110, data storage device 120, websites 130, and external sources 140. The devices in the architecture can be connected through wired connections, wireless connections, or a combination of wired and wireless connections.

As an example, the devices can be connected through a network. The network can be an ad hoc network, an intranet, an extranet, a virtual private network (VPN), a local area network (LAN), a wireless LAN (WLAN), a wide area network (WAN), a wireless wide area network (WWAN), a metropolitan area network (MAN), a portion of the Internet, a portion of the Public Switched Telephone Network (PSTN), a cellular telephone network, a wireless network, a WiFi network, a WiMax network, any other type of network, or a combination of two or more such networks.

Client device 110 may include browser 122. Browser 122 may be an Internet browser. Browser 122 may be used to navigate to website(s) 130. Client device 110 may also execute web-based applications. A user may use client device 110 to use browser 122 and web-based applications.

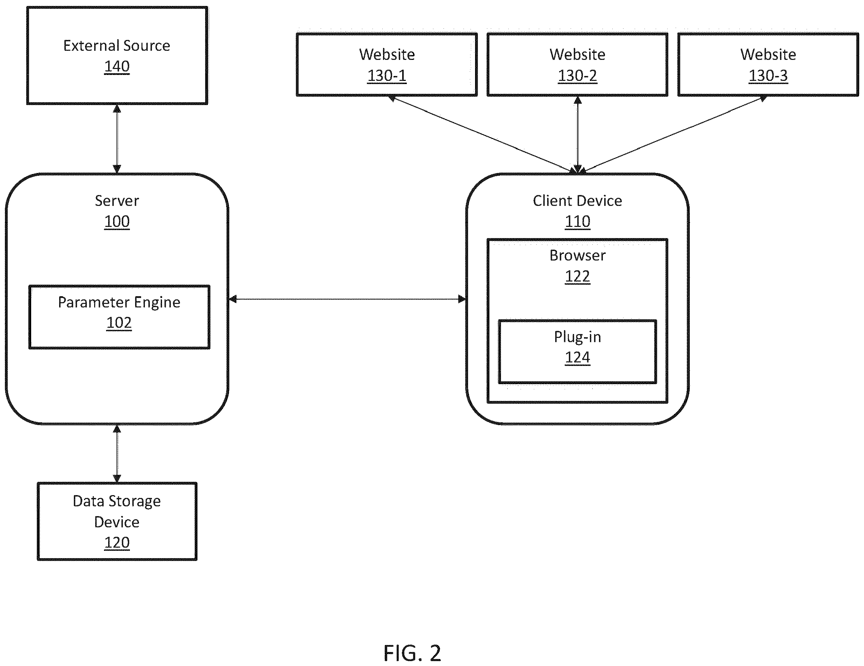

Browser 122 may include a plug-in 124 (e.g., browser extension). Plug-in 124 may be a software component configured to execute functions with respect to browser 122. In particular, plug-in 124 may be configured to execute automated browsing sessions using browser 122 based on parameters defined by parameter engine 102. A user may download plug-in 124 using browser 122. Plug-in 124 may be integrated with browser 122. A user may launch plug-in 124 by selecting a graphical user interface (GUI) element (e.g., a button or link) displayed on a window of browser 122. Plug-in 124 will be described in greater detail with respect to FIG. 2.

Browser 122 may support a user's actual browsing session. The user's actual browsing session may include the user browsing the internet by navigating to websites, interacting with applications, initiating downloads and uploads, etc. Browser 122 may also support automated browsing sessions. Automated browsing sessions may be automated internet browsing executed by an automated script of plug-in 124. Automated browsing sessions may be executed based on a set of parameters generated by parameter engine 102.

Server 100 may include parameter engine 102. Client device 110 may access parameter engine 102 to generate pseudo-user profiles. Based on the pseudo-user profiles, parameter engine 102 may generate parameters for an automated browsing session. The parameters may include but are not limited to web addresses of websites 130 and instructions for interacting with websites 130. The instructions for interacting with websites 130 may include an order to visit websites 130, a duration for remaining on websites 130, how to scroll or pan websites 130, locations or links to click on websites 130, etc.

Data storage device 120 may include one or more databases configured to store structured and unstructured data. Data storage device 120 may store the pseudo-user profiles generated for the user. Furthermore, data storage device 120 may store information about websites frequented by users based on the user demographic and user preferences.

For example, external sources 140 may be one or more databases, data storage devices, websites, servers, etc., configured to store data associated with internet activity for various users. External sources 140 may be associated with different third-party entities. These entities may include corporations, marketing companies, technology companies, etc.

Server 100 may query external sources 140 to retrieve metric data about internet activity/usage of various users. This allows server 100 to identify the top websites frequented by different types of users. Server 100 may store the information about the internet activity/usage of various users in data storage device 120. Server 100 may also include information about the types of users. For example, data storage device 120 may correlate the internet activity/usage with user demographic information and user preferences. As a non-limiting example, data storage device 120 may store websites frequented by fishing enthusiasts.

In some embodiments, server 100 may query external sources 140 to retrieve metric data about the internet activity/usage of various users on a periodic basis. Alternatively, server 100 may query external sources 140 to retrieve metric data about the internet activity/usage of various users based on a received request.

Moreover, data storage device 120 may store information about generating parameters for the automated internet browsing sessions. For example, data storage device 120 may store websites that are often frequented by particular types of users. Parameter engine 102 may use the information about parameters for the automated internet browsing sessions in data storage device 120 to generate the parameters for automated internet browsing sessions for pseudo-user profiles.

FIG. 2 is a block diagram illustrating an example configuration for the system for executing automated browsing sessions, according to some embodiments. FIG. 2 shall be described with reference to FIG. 1.

In some embodiments, a user may use client device 110 to create pseudo-user profiles for executing automated browsing sessions. For example, a user may launch plug-in 124 on browser 122. Client device 110 may transmit a request to create a pseudo user profile to server 100 via plug-in 124. The request may include attributes about the pseudo-user profile. The attributes include user demographic information and user preferences. The user demographic information and user preferences may be fake or false information. In other words, the user demographic information and user preferences may not be associated with the user. In fact, the user may select user demographic information and user preferences that are different than the user's actual demographic information and user preferences.

The user demographic information may include age, gender, ethnicity, geographic location, address, occupation, etc. The user preferences may include likes and dislikes for the pseudo-user profile. As a non-limiting example, the request may indicate user preferences regarding food, hobbies, vacation locations, entertainment, technology, etc.

Parameter engine 102 may receive the request from client device 110. Parameter engine 102 may identify the user's selection in the user demographic information and the user preferences for creating the pseudo-user profile. For example, the request may be formatted in a manner such that parameter engine 102 may identify and extract the user's selections in the user demographic information and the user preferences. As a non-limiting example, the request may be an HTTP request.

Parameter engine 102 may query data storage device 120 to identify websites and behavioral habits associated with the user demographic information and the user preferences. As a non-limiting example, if the user preferences include "fishing" as a hobby, parameter engine 102 may query data storage device 102 to retrieve top 5 (or 10, 20, 30, etc.) websites visited by users that enjoy fishing. Parameter engine 102 may also identify the internet behavioral habits of users that enjoy fishing. Internet behavior habits may include average time spent on particular websites, the actions executed on these websites (e.g., clicks, purchases, views, etc.), downloads, uploads, etc.

In some embodiments, parameter engine 102 may assign weights to each element of the user demographic information and user preferences. The weights may indicate the importance of the element in building the pseudo-user profile. For example, elements such as age, gender, or favorite hobby may be assigned a greater weight as compared to elements such as locality information. Parameter engine 102 may identify internet behavioral habits from data storage device 120 for users that most closely match the user demographic information and user preferences based on the assigned weights. As such, parameter engine 102 may identify internet behavioral habits that most closely match the greater weighted elements.

Parameter engine 102 may generate a set of parameters for executing an automated browsing session based on the websites and behavioral habits associated with the user demographic information and the user preferences. The set of parameters may be part of the pseudo-user profile. The set of parameters may indicate actions to be executed during an automated browsing session. The actions may be associated with browsing the internet. As such, the set of parameters may indicate which websites to visit, the amount of time to spend on these websites, and actions to execute on the websites. The actions may include actuating a link, actuating a button, scrolling, searching, panning, zooming, inputting data in input fields, etc. In some embodiments, the actions may also include downloading files or applications, uploading files or applications, executing applications, and performing actions on the applications.

Parameter engine 102 may store the pseudo-user profile in data storage device 120. The pseudo-user profile may be associated with the user. For example, the pseudo-user profile may be associated with the user's identifier (e.g., username, name, ID number, etc.). In some embodiments, the user may be associated with multiple pseudo-user profiles. Moreover, multiple users may access the same pseudo-user profile.

In some embodiments, parameter engine 102 may periodically update the set of parameters for the pseudo-user profile. For example, parameter engine 102 may determine that the top websites associated with the user demographics and user preferences of the pseudo-user profile have changed since creating the set of parameters. As such, parameter engine 102 may update the set of parameters based on the changes to the top websites.

In some embodiments, a user may launch plug-in 124 by selecting the corresponding GUI element on browser 122. A user may indicate the desired pseudo-user profile and an amount of duration of the automated browsing session using plug-in 124. Plug-in 124 may retrieve the set of parameters associated with the selected pseudo-user profile using the identifier associated with the pseudo-user profile and the user's identifier. Parameter engine 102 may transmit the set of parameters to plug-in 124.

The set of parameters may include instructions to navigate to website 130-1, website 130-2, and website 130-3. The set of parameters may specify the website addresses of website 130-1, website 130-2, and website 130-3, amount of time to spend on website 130-1, website 130-2, and website 130-3, the order in which to navigate to website 130-1, website 130-2, and website 130-3, actions to execute on website 130-1, website 130-2, and website 130-3, etc.

Plug-in 124 may execute an automated script in response to receiving the set of parameters. The automated script may initiate an automated browsing session using browser 122 based on the set of parameters.

The automated script may control client device 110's Input/Output (I/O) peripheral devices during the automated browsing session. The I/O peripheral devices may include a mouse, keyboard, touch-sensitive display, printer, etc. In this regard, the automated script may control the I/O devices to execute actions, including actuating a link, actuating a button, scrolling, searching, panning, zooming, inputting data in input fields, etc., as defined by the set of parameters.

As a non-limiting example, the automated script may instruct browser 122 to open a new browser tab in browser 122 and navigate to website 130-1. The automated script may execute actions defined by the set of parameters on website 130-1.

After a predetermined duration, the automated script may open a new browser tab in browser 122 and navigate to website 130-2 based on the set of parameters. In some embodiments, the automated script may terminate the browser tab of website 130-1. In some embodiments, the automated script may open a new browser window of browser 122 and navigate to website 130-2. The automated script may execute actions on website 130-2 based on the set of parameters.

After a predetermined duration, the automated script may open a new browser tab in browser 122 and navigate to website 130-3 based on the set of parameters. In some embodiments, the automated script may terminate the browser tab of website 130-2. In some embodiments, the automated script may open a new browser window of browser 122 and navigate to website 130-3. The automated script may execute actions on website 130-3 based on the set of parameters.

In some embodiments, website 130-1, 130-2, or 130-3 may be a search engine (e.g., GOOGLE or BING), or website 130-1, 130-2, or 130-3 may include a search functionality. As such, the automated script may provide predetermined text (e.g., a keyword associated with the pseudo-user profile) in the search field and may transmit the request (e.g., click the search button) to execute the search on the search engine based on the set of parameters. The automated script may also select one of the search results based on the set of parameters by actuating a link associated with the search result on the search results page. The set of parameters may indicate a particular search result to select. Alternatively, the set of parameters may indicate that the first search result is to be selected. The automated browsing session may be terminated after the predetermined duration as indicated in the set of parameters.

In some embodiments, the automated script may control the mouse to open the new browser tab or browser window. Alternatively, the automated script may control the keyboard to input a keyboard short to open a new browser tab or browser window.

By executing the automated browsing session using the pseudo-user profile, internet usage data may be generated. For example, the internet usage data may include internet cookies, browsing history, cache files, etc. Moreover, internet usage data may also be generated while the user browses the internet. Entities, including unethical actors, may collect the user's internet usage data.

However, the internet usage data generated during the automated browsing session and the user's actual browsing session may generate data points that are so inconsistent that an unethical actors may be unable to accurately identify the user's demographic information or user preferences.

As a non-limiting example, a user may generate a pseudo-profile based on the user preferences of a fishing enthusiast, while the user may not be a fishing enthusiast. The automated browsing session may generate internet usage data associated with a fishing enthusiast. The user's actual browsing session may not be associated with fishing. As such, the data points created by the automated browsing session and actual browsing session may be inconsistent in terms of user preferences. This may confuse the unethical actor in attempting to scam the user and may eventually deter the unethical actor.

In some embodiments, plug-in 124 may generate a connection with a virtual private network (VPN) before executing the automated browsing session based on the set of parameters. The VPN may generate a virtual connection with a particular network. This network may be in a different jurisdiction (e.g., city, state, country, etc.) than the user. As a result, when the automated browsing session is executed, the internet usage data indicates that the user is located in the different jurisdiction. Moreover,

In some embodiments, parameter engine 102 may generate a set of parameters for a user's actual browsing session based on the user's request. The set of parameters may be associated with actions that limit the amount of internet usage data collected by different entities. For example, the set of parameters may include instructions for forming a connection using VPN such that it appears the user is browsing from a location that has strict regulations of collecting internet usage data (e.g., Europe or California). Alternatively, the set of parameters may include instructions for automatically navigating to websites (e.g., whitelisted websites) and inputting false user demographic information such that regulations prevent entities from collecting internet usage data.

A user may launch plug-in 124 during the user's actual browsing session. Plug-in 124 may retrieve a set of parameters from database 120 for a user's actual browsing session to limit the amount of internet usage data collected during the user actual browsing data. In one example, plug-in 124 may generate a connection with a VPN such that it seems as if the user is located in a jurisdiction with strict user privacy regulations (e.g., Europe or California). This may limit the internet usage data collected during an actual internet usage session.

In another example, the set of parameters may include instructions to navigate to a website. The website may be an approved whitelisted website that may require input of the user's age. The set of parameters may include instructions to input an age for the user in a different demographic range than the user's real age on the website. The age may merit Children's Online Privacy Protection Act (COPPA) protections. The COPPA protections limit the type and amount of data collected when a user of a given age is browsing the internet.

As such, during the actual browsing session, the automated script of plug-in 124 may navigate to the approved whitelisted website (e.g., a financial website) and input the age indicated in the set of parameters. The internet cookies will capture the age indicated on the whitelisted website. For the remainder of the actual browsing session, the user will be considered to be the age indicated on the whitelisted website. As such, the entities that collect the internet usage data, will be limited based on the age of the user indicated in the internet cookies.

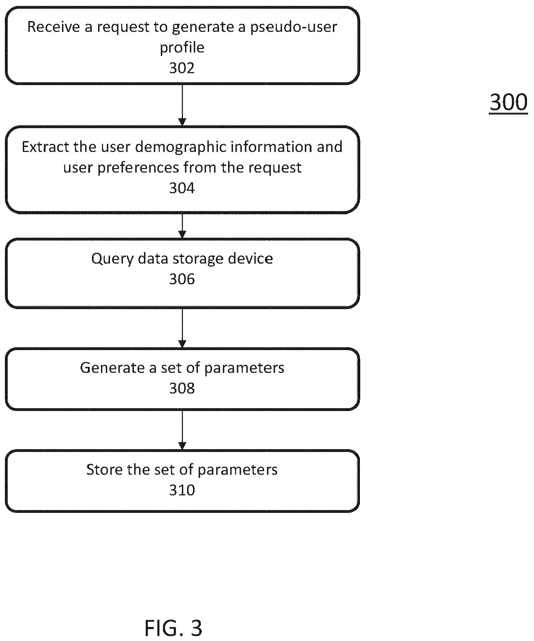

FIG. 3 is a flowchart illustrating generating a set of parameters for executing an automated browsing session, according to some embodiments. Method 300 can be performed by processing logic that can comprise hardware (e.g., circuitry, dedicated logic, programmable logic, microcode, etc.), software (e.g., instructions executing on a processing device), or a combination thereof. It is to be appreciated that not all steps can be needed to perform the disclosure provided herein. Further, some of the steps can be performed simultaneously, or in a different order than shown in FIG. 3, as will be understood by a person of ordinary skill in the art.

Method 300 shall be described with reference to FIG. 1. However, method 300 is not limited to that example embodiment.

In 302, server 100 receives a request to generate a pseudo-user profile for executing an automated browsing session. The request may include user demographic information and user preferences for the pseudo-user profile. Server 100 may receive the request from plug-in 124. For example, a user may launch plug-in 124 by selecting the corresponding GUI element on browser 122. The user may provide inputs associated with the desired pseudo-user profile. The inputs may be text input, radio button selection, drop-down menu selection, etc. The request may be transmitted as an HTTP request.

In 304, parameter engine 102 of server 100 extracts the user demographic information and user preferences from the request. Parameter engine 102 may extract the text, radio button selection, drop-down menu selection, etc., from the request.

In 306, parameter engine 102 queries data storage device 120 to retrieve internet activity for users based on the extracted user demographic information and user preferences. The internet activity may include websites visited by users with similar user demographic information and user preferences, amount of time spent on the websites, actions executed on the websites, downloads, uploads, etc. Server 100 may collect data associated with internet activity for various users from external sources 140. Server 100 may associate the data to various user demographic information and user preferences in data storage device 120.

In 308, parameter engine 102 generates a set of parameters for executing an automated browsing session. The set of parameters may be part of the pseudo-user profile. The set of parameters may be rules for executing an automated browsing session. The rules may include instructions for navigating to websites 130, how long to remain on websites 130, and actions to be executed on websites 130.

In 310, parameter engine 102 stores the set of parameters in data storage device 120. The set of parameters may be correlated with the pseudo-user profile and user in data storage device 120. The pseudo-user profile may be associated with an identifier (e.g., ID number, nickname, pseudo user name, etc.). The pseudo-user profile may be private and only available for use by the user. Alternatively, the pseudo-user profile may be available to other users.

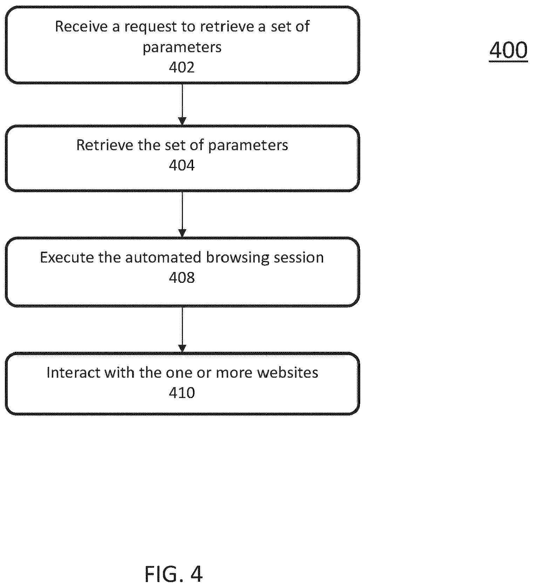

FIG. 4 is a flowchart illustrating a process for executing an automated browsing session, according to some embodiments. Method 400 can be performed by processing logic that can comprise hardware (e.g., circuitry, dedicated logic, programmable logic, microcode, etc.), software (e.g., instructions executing on a processing device), or a combination thereof. It is to be appreciated that not all steps can be needed to perform the disclosure provided herein. Further, some of the steps can be performed simultaneously, or in a different order than shown in FIG. 4, as will be understood by a person of ordinary skill in the art.

Method 400 shall be described with reference to FIG. 1. However, method 400 is not limited to that example embodiment.

In 402, plug-in 124 receives a request to retrieve a set of parameters associated with a pseudo-user profile. For example, a user may launch plug-in 124 on client device 110 and provide an input associated executing an automated browsing session with the desired pseudo-user profile and a duration of an automated browsing session. The request may include an identifier of the pseudo-user profile.

In 404, plug-in 124 retrieves the set of parameters based on the identifier of the pseudo-user profile from data storage device 120. Server 100 may transmit the set of parameters to client device 110.

In 406, plug-in 124 executes an automated browsing session based on the set of parameters using browser 122. For example, the set of parameters may include instructions to navigate to websites 130, a duration to remain on the websites, an order in which to navigate to the websites, and actions to execute on the websites. Plug-in 124 may execute an automated script to execute the automated browsing session. The automated script may control client device 110's I/O peripheral devices to execute the automated browsing sessions based on the set of parameters.

In 408, plug-in 124 interacts with the websites indicated in the set of parameters based on the set of parameters. For example, the automated script may execute actions on the websites based on the set of parameters. The automated script may control the client device 110's I/O peripheral devices to execute the actions.

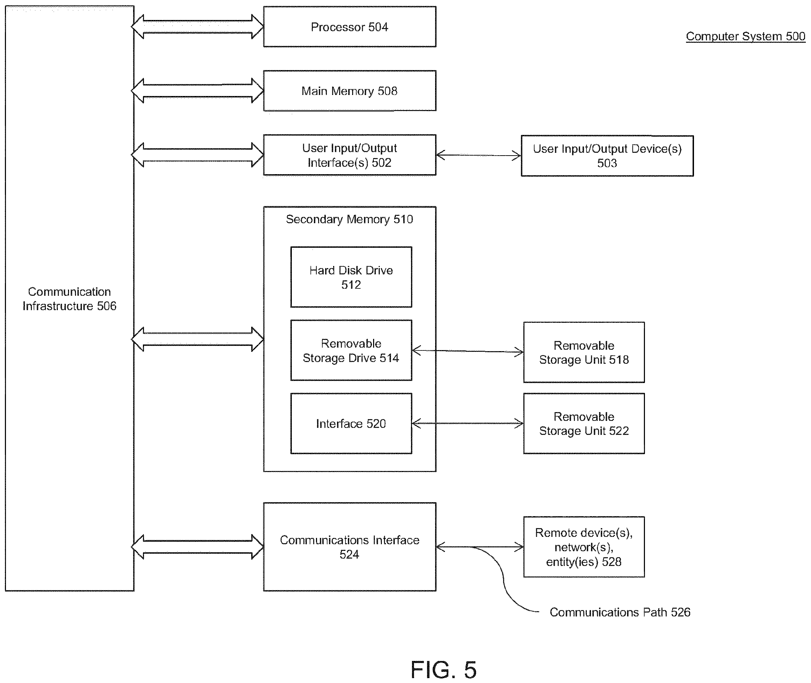

Various embodiments can be implemented, for example, using one or more computer systems, such as computer system 500 shown in FIG. 5. Computer system 500 can be used, for example, to implement methods 300 of FIG. 3 and method 400 of FIG. 4. Furthermore, computer system 500 can be at least part of server 100, client device 110, data storage device 120, and external sources 140, as shown in FIG. 1. For example, computer system 500 route communication to various applications. Computer system 500 can be any computer capable of performing the functions described herein.

Computer system 500 can be any well-known computer capable of performing the functions described herein.

Computer system 500 includes one or more processors (also called central processing units, or CPUs), such as a processor 504. Processor 504 is connected to a communication infrastructure or bus 506.

One or more processors 504 can each be a graphics processing unit (GPU). In an embodiment, a GPU is a processor that is a specialized electronic circuit designed to process mathematically intensive applications. The GPU can have a parallel structure that is efficient for parallel processing of large blocks of data, such as mathematically intensive data common to computer graphics applications, images, videos, etc.

Computer system 500 also includes user input/output device(s) 503, such as monitors, keyboards, pointing devices, etc., that communicate with communication infrastructure 506 through user input/output interface(s) 502.

Computer system 500 also includes a main or primary memory 508, such as random access memory (RAM). Main memory 508 can include one or more levels of cache. Main memory 508 has stored therein control logic (i.e., computer software) and/or data.

Computer system 500 can also include one or more secondary storage devices or memory 510. Secondary memory 510 can include, for example, a hard disk drive 512 and/or a removable storage device or drive 514. Removable storage drive 514 can be a floppy disk drive, a magnetic tape drive, a compact disk drive, an optical storage device, tape backup device, and/or any other storage device/drive.

Removable storage drive 514 can interact with a removable storage unit 518. Removable storage unit 518 includes a computer usable or readable storage device having stored thereon computer software (control logic) and/or data. Removable storage unit 518 can be a floppy disk, magnetic tape, compact disk, DVD, optical storage disk, and/ any other computer data storage device. Removable storage drive 514 reads from and/or writes to removable storage unit 518 in a well-known manner.

According to an exemplary embodiment, secondary memory 510 can include other means, instrumentalities, or other approaches for allowing computer programs and/or other instructions and/or data to be accessed by computer system 500. Such means, instrumentalities, or other approaches can include, for example, a removable storage unit 522 and an interface 520. Examples of the removable storage unit 522 and the interface 520 can include a program cartridge and cartridge interface (such as that found in video game devices), a removable memory chip (such as an EPROM or PROM) and associated socket, a memory stick and USB port, a memory card and associated memory card slot, and/or any other removable storage unit and associated interface.

Computer system 500 can further include a communication or network interface 524. Communication interface 524 enables computer system 500 to communicate and interact with any combination of remote devices, remote networks, remote entities, etc. (individually and collectively referenced by reference number 528). For example, communication interface 524 can allow computer system 500 to communicate with remote devices 528 over communications path 526, which can be wired and/or wireless, and which can include any combination of LANs, WANs, the Internet, etc. Control logic and/or data can be transmitted to and from computer system 500 via communication path 526.

In an embodiment, a tangible, non-transitory apparatus or article of manufacture comprising a tangible, non-transitory computer useable or readable medium having control logic (software) stored thereon is also referred to herein as a computer program product or program storage device. This includes, but is not limited to, computer system 500, main memory 508, secondary memory 510, and removable storage units 518 and 522, as well as tangible articles of manufacture embodying any combination of the foregoing. Such control logic, when executed by one or more data processing devices (such as computer system 500), causes such data processing devices to operate as described herein.

Based on the teachings contained in this disclosure, it will be apparent to persons skilled in the relevant art(s) how to make and use embodiments of this disclosure using data processing devices, computer systems and/or computer architectures other than that shown in FIG. 5. In particular, embodiments can operate with software, hardware, and/or operating system implementations other than those described herein.

It is to be appreciated that the Detailed Description section, and not any other section, is intended to be used to interpret the claims. Other sections can set forth one or more but not all exemplary embodiments as contemplated by the inventor(s), and thus, are not intended to limit this disclosure or the appended claims in any way.

While this disclosure describes exemplary embodiments for exemplary fields and applications, it should be understood that the disclosure is not limited thereto. Other embodiments and modifications thereto are possible, and are within the scope and spirit of this disclosure. For example, and without limiting the generality of this paragraph, embodiments are not limited to the software, hardware, firmware, and/or entities illustrated in the figures and/or described herein. Further, embodiments (whether or not explicitly described herein) have significant utility to fields and applications beyond the examples described herein.

Embodiments have been described herein with the aid of functional building blocks illustrating the implementation of specified functions and relationships thereof. The boundaries of these functional building blocks have been arbitrarily defined herein for the convenience of the description. Alternate boundaries can be defined as long as the specified functions and relationships (or equivalents thereof) are appropriately performed. Also, alternative embodiments can perform functional blocks, steps, operations, methods, etc. using orderings different than those described herein.

References herein to "one embodiment," "an embodiment," "an example embodiment," or similar phrases indicate that the embodiment described can include a particular feature, structure, or characteristic, but every embodiment can not necessarily include the particular feature, structure, or characteristic. Moreover, such phrases are not necessarily referring to the same embodiment. Further, when a particular feature, structure, or characteristic is described in connection with an embodiment, it would be within the knowledge of persons skilled in the relevant art(s) to incorporate such feature, structure, or characteristic into other embodiments whether or not explicitly mentioned or described herein. Additionally, some embodiments can be described using the expression "coupled" and "connected" along with their derivatives. These terms are not necessarily intended as synonyms for each other. For example, some embodiments can be described using the terms "connected" and/or "coupled" to indicate that two or more elements are in direct physical or electrical contact with each other. The term "coupled," however, can also mean that two or more elements are not in direct contact with each other but yet still co-operate or interact with each other.

The breadth and scope of this disclosure should not be limited by any of the above-described exemplary embodiments, but should be defined only in accordance with the following claims and their equivalents.

## Claims

1. A method comprising:
receiving, by a plug-in integrated with an internet browser, a request to execute an automated browsing session for a user profile;
retrieving, by the plug-in, a set of parameters associated with the user profile, wherein the set of parameters comprises one or more rules of executing an automated browsing session and is generated based on a fake attribute of the user profile;
executing, by the plug-in, the automated browsing session by automatically navigating to one or more websites, as indicated in the set of parameters; and
interacting, by the plug-in, with the one or more websites based on the set of parameters.

2. The method of claim 1, wherein the interacting with the one or more websites comprises: actuating a link, actuating a button, scrolling, searching, and panning.

3. The method of claim 1 or 2, wherein the set of parameters further comprises at least one of:
(a) web addresses of the one or more websites and instructions for interacting with the one or more websites; and
(b) instructions for executing a search on a website of the one or more websites using a keyword associated with the user profile, and actuating a link corresponding to a new website included in search results of an executed search.

4. The method of any one of the preceding claims, wherein navigating to the one or more websites further comprises: launching a new browser window or tab.

5. The method of any one of the preceding claims, wherein the fake attribute of the user profile comprises at least one of a fake user demographic selected by the user or a fake user preference selected by the user.

6. The method of any one of the preceding claims, wherein executing the automated browsing session further comprises controlling the input/output (I/O) peripheral devices of a user device.

7. A system comprising:
a memory; and
a processor coupled to the memory, wherein the processor is configured to:
receive a request to execute an automated browsing session for a user profile;
retrieve a set of parameters associated with the user profile, wherein the set of parameters comprises one or more rules of executing an automated browsing session and is generated based on a fake attribute of the user profile;
execute the automated browsing session by automatically navigating to one or more websites, as indicated in the set of parameters; and
interact with the one or more websites based on the set of parameters.

8. The system of claim 7, wherein the interacting with the one or more websites comprises: actuating a link, actuating a button, scrolling, searching, and panning.

9. The system of claim 7 or 8, wherein the set of parameters further comprises at least one of:
(a) web addresses of the one or more websites and instructions for interacting with the one or more websites; and
(b) instructions for executing a search on a website of the one or more websites using a keyword associated with the user profile and actuating a link corresponding to a new website included in search results of an executed search.

10. The system of any one of claims 7 to 9, wherein when navigating to the one or more websites, the processor is further configured to launch a new browser window or tab.

11. The system of any one of claims 7 to 10, wherein the fake attribute of the user profile comprises at least one of a fake user demographic selected by the user or a fake user preference selected by the user.

12. The system of any one of claims 7 to 11, wherein executing the automated browsing session further comprises controlling the input/output (I/O) peripheral devices of a user device.

13. A computer program which, when executed by one or more processors of a device, causes the one or more processors to carry out the method of any one of claims 1 to 6.

14. A computer-readable medium storing the computer program of claim 13.
